# EUROPEAN PATENT SPECIFICATION

(11) **EP 0 886 129 B1**
(45) Date of publication and mention of the grant of the patent: **11.03.2009**
(21) Application number: 98111176.8
(22) Date of filing: 18.06.1998
(51) Int. Cl.: G01F 23/14, G01F 23/16

(54) **A method and means for detecting the level of a liquid**
Verfahren und Mittel zur Füllstandsermittlung einer Flüssigkeit
Procédé et moyens pour la détection du niveau d' un liquide

(30) Priority: 19.06.1997 IT NU970003
(43) Date of publication of application: 23.12.1998
(73) Proprietor: LOUSYSTEM S.N.C. di Loi Ernesto e C., 08049 Villagrande Strisaili (OG) (IT)
(72) Inventor: Uselli, Severino, Barisardo (Nuoro) (IT); Loi, Ernesto, Villagrande Str. (Nuoro) (IT)
(74) Representative: Gervasi, Gemma

(56) References cited:
- FR-A- 2 738 629
- US-A- 4 338 809
- US-A- 5 347 863
- "Pneumatic liquid level sensor" IBM TECHNICAL DISCLOSURE BULLETIN, vol. 28, no. 2, July 1985 (1985-07), page 534 XP002107250 usa

## Description

The present invention concerns means for detecting the level of a liquid, particularly at the inside of wells and a respective method.

From the state of art electronic level probes are known which make use of an electric current flow through a liquid the level of which is to be detected. These probes have substantial drawbacks, particularly when they are used to detect the level of water at the inside of wells, because they may be easily influenced by electric currents wandering through underground waters, by moisture and by slime which may accumulate between probes, due to the fact the the survey is made by comparing the signals generated by a pair of probes.

FR 2738629, against which claim 1 has been delimited, discloses a device for measuring the level of a liquid. The device includes a tube having the lower extremity thereof immersed in a liquid, the level of which is to be measured. A T junction is provided in the tube, in order to enable pressure measurement inside the tube. A compressor is connected via pipes to the tube. The T junction is coupled to a differential pressure sensor placed inside a sealed enclosure. The signal generated by the sensor is sent to an amplifier, which is connected to a threshold detecting circuit and display.

At present, there are not other kinds of probes, in addition to the above mentioned probes, which may be used easily and are reliable.

It is an object of the present invention to overcome the above mentioned drawbacks.

According to a first aspect of the present invention there is provided means for detecting the level of a liquid as defined in Claim 1.

According to a second aspect of the present invention there is provided a method as defined in Claim 11 for detecting the level of a liquid comprising positioning an end of conduit means in a preestablished position with respect to the surface of said liquid, said conduit means being capable of allowing said liquid to enter through said end, introducing a pressurised detecting fluid into said conduit means and measuring a pressure variation in said detecting fluid at the inside of said conduit means.

The detecting means according to the present invention are very simple from a structural point of view, are very reliable, because they cannot be influenced by wandering electric currents, by moisture and by slime accumulations, if any. In addition, said detecting means works independently and does not need to be associated with other detecting means of the same kind or of different kind.

A non-limiting example of carrying the invention into effect will be described now here below, with reference to the enclosed drawing tables in which:
Figure 1 is a sketch of detecting means according to the invention, inserted in a well in which the level of water is to be detected;
Figures 2 to 6 are sketches like that of Figure 1 which illustrate how the detecting means according to the invention works, as will be explained here below.

The detecting means according to the invention comprises e tubular element D which is capable to contain a detecting fluid, for instance air, and is provided with an end portion through which the liquid the level of which is to be detected may enter. The tubular element D, at an end opposite to said end portion, is provided with vent means A, for instance an adjustable diaphragm, capable of discharging a flow of said detecting fluid towards the outside, if the pressure at the inside of the tubular element D exceeds a preestablished value. The tubular element D is plunged, for instance, into a well until it reaches a preestablished depth with said end portion, whilst a stretch of the opposite end protrudes from the top of the well. The tubular element D, preferably made of an electricity nonconductive material, for instance a plastic material, is connected at said stretch with pressure generating means B, capable of introducing a pressurised detecting fluid, for instance air or other gas, into the element D, and with pressure sensor means C, capable of measuring the pressure at the inside of the tubular element D and operatively connected with said pressure generating means B. Said pressure generating means B may, for instance, consist of a pump, whilst said pressure sensor means C may consist of a pressure switch capable of controlling the pump feeding.

The pressure switch C operates a pair of switch means comprising first control means 1, 2, 3, capable of controlling start and stop of the pump, and second control means 4, 5, 6 capable of activating or deactivating signalling means which generates a signal, for instance a light or acoustic signal, indicating the presence of water at the inside of the well, at a preestablished depth.

The pump B may be, for instance, electrically fed. in this instance, the second control means 4, 5, 6, may be electric switch means connected to the electric circuit feeding the signal means.

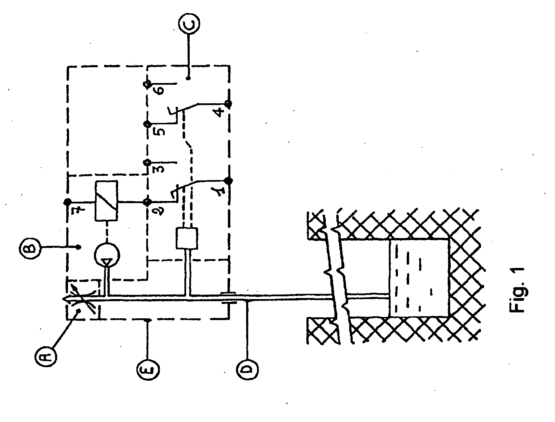

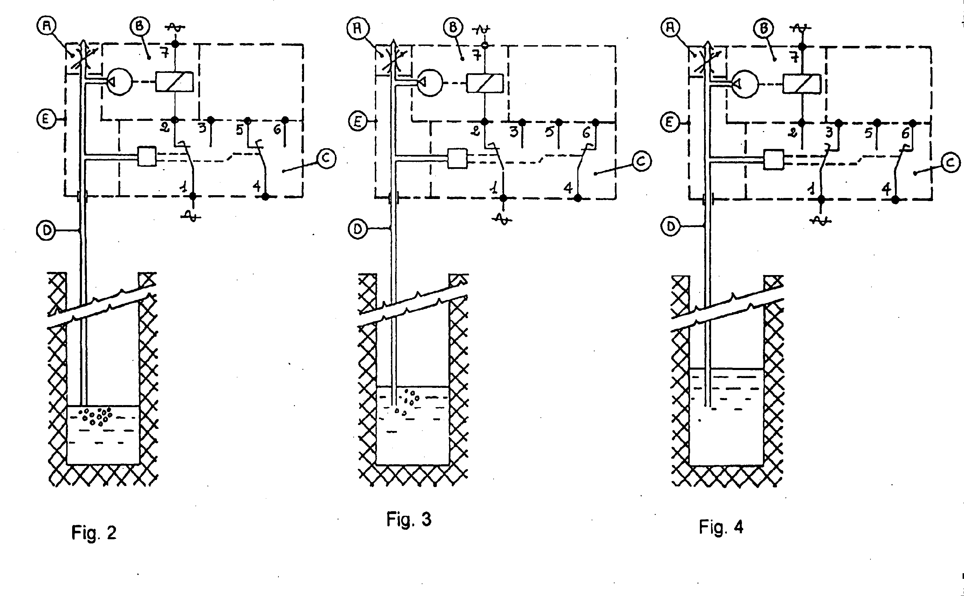

The detecting means according to the invention works as follows:
the tubular element D is introduced, for instance at the inside of a well, until said end portion reaches a preestablished depth (Figure 1) and the pump B is started, which introduces pressurised air into the tubular element D. If the end portion of the tubular element D is immersed in the water at the inside of the well, the pressure inside it increases until it becomes greater than the hydrostatic pressure of the column of water contained in said end portion; now the pressurised air may exit from said lower end (Figure 3) and the pressure at the inside of the tubular element D levels off at a value depending on the height of said column of water. If said value of pressure is equal or higher than a first preestablished setting value of the pressure switch, for instance about 1-2 x 10³ Pa (10-20 mbar), the pressure switch C drives in to a closed position the second switch means 4, 5, 6 (Figure 3) which activates the signalling circuit that generates a signal indicating that at least a preestablished length of the tubular element D is immersed into the water, for instance about 10-20 cm.

If the end portion of the tubular element D is not immersed in the water, or is immersed for a length less than said preestablished length (Figure 2), the pressure at the inside of the tubular element D levels off at a value less than said first preestablished value and the second switch means 4, 5, 6, remains in an open position without said signal being generated.

If the end portion of the tubular element D is immersed in the water for a length greater than said preestablished length (Figure 4), the pressure at its inside increases over said first preestablished value and, when it reaches a second preestablished setting value of the pressure switch C, for instance about 1-2 x 10³ Pa (20-30 mbar), the latter drives the first switch element 1, 2, 3 into an open position, which causes the pump B to be stopped, in order to prevent pressure at the inside of the tubular element D from reaching excessive values. The detecting means according to the invention may also be used for a continuous monitoring of the level of a liquid, for instance the level of water in a well. In that instance, when the tubular element D has been immersed into the well and the presence of the water at a preestablished depth has been detected, as described above, one continues to feed compressed air into the tubular element D, by means of the pump B. If the level of water at the inside of the well remains constant, the pressure at the inside of the element D remains constant and the second switch means 4, 5, 6 remains in an closed position keeping alive the signal indicating the presence of water at the preestablished depth.

If the level of water at the inside of the well decreases, the pressure at the inside of the tubular element D decreases as well. When the pressure become less than said first setting value of the pressure switch C, the pressure switch C drives the second switch element 4, 5, 6, into an open position, which causes the signal indicating the presence of water at the preestablished depth to be deactivated.

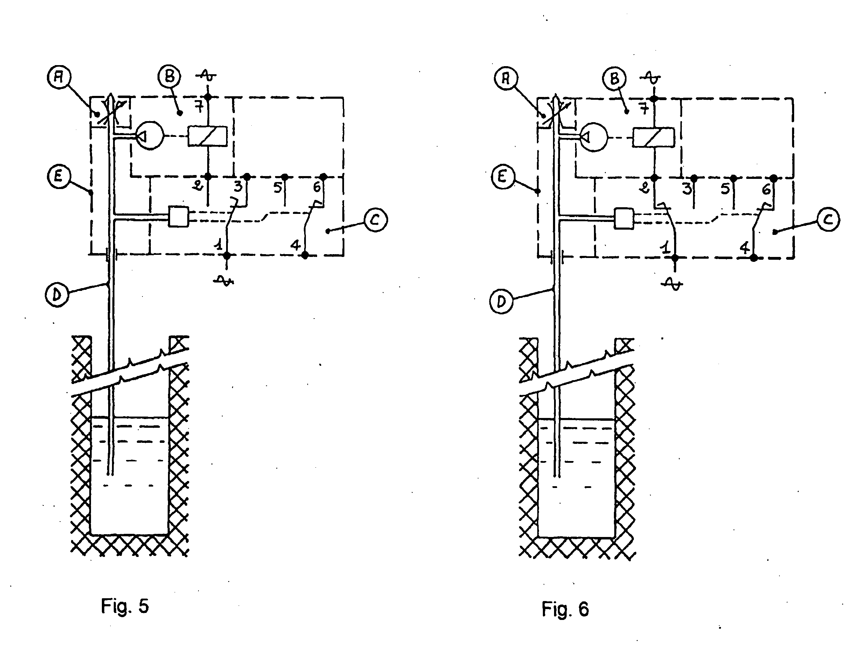

If, on the contrary, the level of water at the inside of the well increases, the pressure at the inside of the tubular element D increases as well. If the pressure exceeds said second setting value of the pressure switch C, the latter drives the first switch element 1, 2, 3 into an open position, which causes the pump B to be stopped (Figure 5). When the pump B has been stopped, an amount of the air which is at the inside of the tubular element D is discharged towards the outside through the vent means A, until the pressure decreases up to said first setting value of the pressure switch C, so that the pressure switch is again activated driving the first switch element 1, 2, 3 into a closed position, which causes the pump B to be started (Figure 6). The cycle is repeated so that the tubular element D is continuously kept pressurised, without the pressure being capable to reach too high values.

The detecting means according to the invention may be used both to detect the level of water at the inside of wells and to detect the level of a liquid at the inside of any kind of container, particularly at the inside of underground containers, such as cisterns. In addition, since the tubular element D is made of a material not capable of conducting electric currents, there is no danger that electric currents may propagate through it. The probe may thus be used to check the level of inflammable liquids at the inside of tanks. In addition, if the detecting means according to the invention is operatively associated with a submersible pump, which is designed to pump a liquid from the inside of a well or other container, it is possible to prevent the pump from idling, if the level of the liquid decreases under the aspiration level of the pump.

It is to be noticed that it is enough to use only one tubular element D in order to check the level of a liquid, but it is possible to use a plurality of tubular elements D in order to monitor the level of a liquid at different depths.

When carrying the invention into effect, the materials, dimensions and execution details might be different from, but technically equivalent to, those described, without departing from the scope of the claims.

## Claims

1. Means for detecting the level of a liquid comprising conduit means (D) arranged for containing a detecting fluid and having an end portion through which said liquid may enter, pressure generating means (B) arranged for pressurising said detecting fluid inside said conduit means (D) and sensor means (C) sensitive to the pressure of said liquid inside said conduit means (D), **characterised in that** said conduit means (D) is provided with vent means (A) arranged to discharge a flow of said detecting fluid outside said conduit means, when the pressure inside said conduit means (D) exceeds a preestablished value.

2. Means for detecting the level of a liquid according to claim 1, wherein said conduit means (D) is made of an electrically insulating material.

3. Means for detecting the level of a liquid according to claim 1, or 2, wherein said sensor means (C) is operatively associated with first control means (1, 2, 3) arranged for controlling start and stop of said pressure generating means (B).

4. Means for detecting the level of a liquid according to one of preceding claims, wherein said pressure generating means (B) is electrically operated.

5. Means for detecting the level of a liquid according to claim 3, or according to claim 4 as appended to claim 3, wherein said first control means comprises first switch means (1, 2, 3) arranged for controlling start and stop of said pressure generating means (B).

6. Means for detecting the level of a liquid according to any preceding claim, wherein said sensor means (C) is operatively associated with second control means (4, 5, 6) arranged for activating and deactivating signaling means, said signaling means being arranged for generating a signal.

7. Means for detecting the level of a liquid according to claim 6, wherein said second control means comprises second switch means (4, 5, 6) arranged for activating and deactivating said signalling means.

8. Means for detecting the level of a liquid according to claim 3, or to anyone of claims 4 to 7 as appended to claim 3, wherein said sensor means (C) is arranged to operate said first control means (1, 2, 3) when the pressure at the inside of said conduit means (D) reaches a pre-established value.

9. Means for detecting the level of a liquid according to claim 6, or to claim 7 or 8 as appended to claim 6, wherein said sensor means (C) is arranged to operate said second control means (4, 5, 6) when the pressure at the inside of said conduit means (D) reaches a further preestablished value.

10. Means for detecting the level of a liquid according to any preceding claim, wherein said conduit means (D) is rectilinear and extends longitudinally so that at least a preestablished length of said conduit means (D) can be immersed in said liquid.

11. A method for detecting the level of a liquid, comprising positioning an end portion of conduit means (D) in a pre-established position with respect to the surface of said liquid, said conduit means being such as to enable said liquid to enter through said end portion, introducing a detecting fluid into said conduit means (D) and measuring a pressure variation in said detecting fluid at the inside of said conduit means (D), **characterised in that** said method further comprises discharging a flow of said detecting fluid outside said conduit means (D) through vent means (A) when the pressure inside said conduit means (D) exceeds a preestablished value.

12. A method according to claim 11, wherein said pressure variation causes first control means (1, 2, 3), arranged for preventing or allowing the introduction of said detecting fluid into said conduit means (D), to be operated.

13. A method according to claim 11, or 12, wherein said pressure variation causes second control means (4, 5, 6), arranged for activating or deactivating signalling means, to be operated.

14. A method according to any one of claims 11 to 13, further comprising operating said first control means (1, 2, 3) when the pressure at the inside of said conduit means (D) reaches a preestablished value.

15. A method according to any one of claims 11 to 14, further comprising operating said second control means (4, 5, 6) when the pressure at the inside of said conduit means (D) reaches a further pre-established value.

## Patentansprüche

1. Verfahren zur Ermittlung der Füllstandshöhe einer Flüssigkeit, welches umfasst: ein Rohrleitungsmittel (D), welches dergestalt ausgelegt ist, dass es ein Nachweismedium aufnimmt, und welches einen Endabschnitt aufweist, durch welchen die genannte Flüssigkeit eintreten kann; ein Druck erzeugendes Mittel (B), welches dergestalt ausgelegt ist, dass es das Nachweismedium im Innern des genannten Rohrleitungsmittels (D) mit Druck beaufschlagt; und ein Sensormittel (C), welches für den Druck der genannten Flüssigkeit im Innern des genannten Rohrleitungsmittels (D) empfindlich ist, **dadurch gekennzeichnet, dass** das genannte Rohrleitungsmittel (D) mit einem Ablassmittel (A) ausgestattet ist, welches so beschaffen ist, dass es einen Strom des genannten Nachweismediums aus dem genannten Rohrleitungsmittel ableitet, wenn der Druck im Innern des genannten Rohrleitungsmittels (D) einen vorher festgelegten Wert überschreitet.

2. Mittel zur Ermittlung der Füllstandshöhe einer Flüssigkeit nach Anspruch 1, bei welchem das genannte Rohrleitungsmittel (D) aus einem elektrisch isolierenden Material gefertigt ist.

3. Mittel zur Ermittlung der Füllstandshöhe einer Flüssigkeit nach Anspruch 1 oder 2, bei welchem das genannte Sensormittel C mit ersten Steuerungsmitteln (1, 2, 3) funktionell verbunden ist, welche dergestalt ausgelegt sind, dass sie das Starten und das Beenden des Betriebs des genannten Druck erzeugenden Mittels (B) steuern.

4. Mittel zur Ermittlung der Füllstandshöhe einer Flüssigkeit nach einem der vorangehenden Ansprüche, bei welchem das genannte Druck erzeugende Mittel (B) elektrisch betrieben wird.

5. Mittel zur Ermittlung der Füllstandshöhe einer Flüssigkeit nach Anspruch 3 oder nach Anspruch 4, wie dieser an Anspruch 3 angehängt ist, bei welchem das genannte erste Steuerungsmittel erste Schaltermittel (1, 2, 3) umfasst, die dergestalt ausgelegt sind, dass sie das Starten und das Beenden des Betriebs des genannten Druck erzeugenden Mittels (B) steuern.

6. Mittel zur Ermittlung der Füllstandshöhe einer Flüssigkeit nach irgend einem der vorangehenden Ansprüche, bei welchem das genannte Sensormittel (C) mit zweiten Steuerungsmitteln (4, 5, 6) funktionell verbunden ist, welche dergestalt ausgelegt sind, dass sie Signalgebemittel aktivieren und deaktivieren, wobei die genannten Signalgebemittel dazu dienen, ein Signal zu erzeugen.

7. Mittel zur Ermittlung der Füllstandshöhe einer Flüssigkeit nach Anspruch 6, bei welchem das genannte zweite Steuerungsmittel zweite Schaltermittel (4, 5, 6) umfasst, welche dergestalt ausgelegt sind, dass sie die genannten Signalgebemittel aktivieren und deaktivieren.

8. Mittel zur Ermittlung der Füllstandshöhe einer Flüssigkeit nach Anspruch 3 oder nach irgend einem der Ansprüche 4 bis 7, wie sie an den Anspruch 3 angehängt sind, bei welchem das genannte Sensormittel (C) dergestalt ausgelegt ist, dass es die genannten ersten Steuerungsmittel (1, 2, 3) ansteuert, wenn der Druck im Innern des genannten Rohrleitungsmittels (D) einen vorher festgelegten Wert erreicht.

9. Mittel zur Ermittlung der Füllstandshöhe einer Flüssigkeit nach Anspruch 6 oder nach Anspruch 7 oder 8, wie sie an den Anspruch 6 angehängt sind, bei welchem das genannte Sensormittel (C) dergestalt ausgelegt ist, dass es die genannten zweiten Steuerungsmittel (4, 5, 6) ansteuert, wenn der Druck im Innern des genannten Rohrleitungsmittels (D) einen vorher festgelegten Wert erreicht.

10. Mittel zur Ermittlung der Füllstandshöhe einer Flüssigkeit nach irgend einem der vorangehenden Ansprüche, bei welchem das genannte Rohrleitungsmittel (D) geradlinig ausgebildet ist und sich dergestalt in Längsrichtung erstreckt, dass mindestens eine vorher festgelegte Länge des genannten Rohrleitungsmittels (D) in die genannte Flüssigkeit eingetaucht werden kann.

11. Verfahren zur Ermittlung der Füllstandshöhe einer Flüssigkeit, welches das Positionieren eines Endabschnitts des Rohrleitungsmittels (D) an einer vorher festgelegten Stelle in Bezug auf die Oberfläche der genannten Flüssigkeit umfasst, wobei das genannte Rohrleitungsmittel dergestalt ausgelegt ist, dass es ermöglicht, dass die genannte Flüssigkeit durch den genannten Endabschnitt eintritt, ein Nachweismedium in das genannte Rohrleitungsmittel (D) eingeleitet wird und eine Druckänderung in dem genannten Nachweismedium im Innern des genannten Rohrleitungsmittels (D) gemessen wird, **dadurch gekennzeichnet, dass** das genannte Verfahren außerdem das Austreten eines Stromes des genannten Nachweismediums aus dem genannten Rohrleitungsmittel (D) durch Ablassmittel (A) umfasst, wenn der Druck im Innern des genannten Rohrleitungsmittels (D) einen vorher festgelegten Wert überschreitet.

12. Verfahren nach Anspruch 11, bei welchem die genannte Druckänderung bewirkt, dass erste Steuerungsmittel (1, 2, 3) angesteuert werden, welche dergestalt ausgelegt sind, dass sie den Eintritt des genannten Nachweismediums in das genannte Rohrleitungsmittel (D) verhindern oder ermöglichen.

13. Verfahren nach Anspruch 11 oder 12, bei welchem die genannte Druckänderung bewirkt, dass zweite Steuerungsmittel (4, 5, 6) angesteuert werden, welche dergestalt ausgelegt sind, dass sie Signalgebemittel aktivieren oder deaktivieren.

14. Verfahren nach irgend einem der Ansprüche 11 bis 13, welches ferner das Ansteuern der genannten ersten Steuerungsmittel (1, 2, 3) umfasst, wenn der Druck im Innern des genannten Rohrleitungsmittel (D) einen vorher festgelegten Wert erreicht.

15. Verfahren nach irgend einem der Ansprüche 11 bis 14, welches ferner das Ansteuern der genannten zweiten Steuerungsmittel (4, 5, 6) umfasst, wenn der Druck im Innern des genannten Rohrleitungsmittel (D) einen vorher festgelegten Wert erreicht.

## Revendications

1. Moyens de détection du niveau d'un liquide, comprenant des moyens formant conduit (D) conçus pour contenir un fluide de détection et présentant une partie d'extrémité à travers laquelle ledit liquide peut pénétrer, des moyens de génération de pression (B) conçus pour pressuriser ledit fluide de détection à l'intérieur desdits moyens formant conduit (D) et des moyens formant capteur (C) sensibles à la pression dudit liquide à l'intérieur desdits moyens formant conduit (D), **caractérisés en ce que** lesdits moyens formant conduit (D) sont munis de moyens de ventilation (A) conçus pour expulser desdits moyens formant conduit un flux dudit fluide de détection quand la pression à l'intérieur desdits moyens formant conduit (D) dépasse une valeur prédéterminée.

2. Moyens de détection du niveau d'un liquide selon la revendication 1, dans lesquels lesdits moyens formant conduit (D) sont faits d'un matériau d'isolation électrique.

3. Moyens de détection du niveau d'un liquide selon la revendication 1 ou 2, dans lesquels lesdits moyens formant capteur (C) sont fonctionnellement associés à de premiers moyens de commande (1, 2, 3) conçus pour commander la mise en marche et l'arrêt desdits moyens de génération de pression (B).

4. Moyens de détection du niveau d'un liquide selon l'une quelconque des revendications précédentes, dans lesquels lesdits moyens de génération de pression (B) sont actionnés par électricité.

5. Moyens de détection du niveau d'un liquide selon la revendication 3 ou selon la revendication 4 en ce qu'elle dépend de la revendication 3, dans lesquels lesdits premiers moyens de commande comprennent de premiers moyens de commutation (1, 2, 3) conçus pour commander la mise en marche et l'arrêt desdits moyens de génération de pression (B).

6. Moyens de détection du niveau d'un liquide selon l'une quelconque des revendications précédentes, dans lesquels lesdits moyens formant capteur (C) sont fonctionnellement associés à de seconds moyens de commande (4, 5, 6) conçus pour activer et désactiver des moyens de signalisation, lesdits moyens de signalisation étant conçus pour générer un signal.

7. Moyens de détection du niveau d'un liquide selon la revendication 6, dans lesquels lesdits seconds moyens de commande comprennent de seconds moyens de commutation (4, 5, 6) conçus pour activer et désactiver lesdits moyens de signalisation.

8. Moyens de détection du niveau d'un liquide selon la revendication 3 ou selon l'une quelconque des revendications 4 à 7 en ce qu'elles dépendent de la revendication 3, dans lesquels lesdits moyens formant capteur (C) sont conçus pour actionner lesdits premiers moyens de commande (1, 2, 3) quand la pression à l'intérieur desdits moyens formant conduit (D) atteint une valeur prédéterminée.

9. Moyens de détection du niveau d'un liquide selon la revendication 6, ou selon la revendication 7 ou 8 en ce qu'elles dépendent de la revendication 6, dans lesquels lesdits moyens formant capteur (C) sont conçus pour actionner lesdits seconds moyens de commande (4, 5, 6) quand la pression à l'intérieur desdits moyens formant conduit (D) atteint une autre valeur prédéterminée.

10. Moyens de détection du niveau d'un liquide selon l'une quelconque des revendications précédentes, dans lesquels lesdits moyens formant conduit (D) sont rectilignes et s'étendent longitudinalement de manière à ce qu'au moins une longueur prédéterminée desdits moyens formant conduit (D) puisse être immergée dans ledit liquide.

11. Procédé de détection du niveau d'un liquide, comprenant les étapes consistant à positionner une partie d'extrémité de moyens formant conduit (D) dans une position prédéterminée par rapport à la surface dudit liquide, lesdits moyens formant conduit étant conçus de sorte à permettre audit liquide de pénétrer à travers ladite partie d'extrémité, introduire un fluide de détection dans lesdits moyens formant conduit (D) et mesurer une variation de la pression dans ledit fluide de détection à l'intérieur desdits moyens formant conduit (D), **caractérisé en ce que** ledit procédé comprend en outre l'étape consistant à expulser desdits moyens formant conduit (D) un flux dudit fluide de détection, à travers des moyens de ventilation (A) quand la pression à l'intérieur desdits moyens formant conduit (D) dépasse une valeur prédéterminée.

12. Procédé selon la revendication 11, dans lequel ladite variation de pression entraîne l'actionnement de premiers moyens de commande (1, 2, 3) conçus pour empêcher ou permettre l'introduction dudit fluide de détection dans lesdits moyens formant conduit (D).

13. Procédé selon la revendication 11 ou 12, dans lequel ladite variation de pression entraîne l'actionnement de seconds moyens de commande (4, 5, 6) conçus pour activer ou désactiver des moyens de signalisation.

14. Procédé selon l'une quelconque des revendications 11 à 13, comprenant en outre l'étape consistant à actionner lesdits premiers moyens de commande (1, 2, 3) quand la pression à l'intérieur desdits moyens formant conduit (D) atteint une valeur prédéterminée.

15. Procédé selon l'une quelconque des revendications 11 à 14, comprenant en outre l'étape consistant à actionner lesdits seconds moyens de commande (4, 5, 6) quand la pression à l'intérieur desdits moyens formant conduit (D) atteint une autre valeur prédéterminée.
